# EUROPEAN PATENT APPLICATION

(11) **EP 3 267 520 A1**
(43) Date of publication of application: **10.01.2018**
(21) Application number: 16177927.7
(22) Date of filing: 05.07.2016
(51) Int. Cl.: H01M 6/42, H01M 10/04, H01M 10/0585, H01M 10/052

(54) **MULTIPURPOSE BATTERY AND MANUFACTURING METHOD FOR A MULTIPURPOSE BATTERY**

(71) Applicant: Vestel Elektronik Sanayi ve Ticaret A.S., 45030 Manisa (TR)
(72) Inventor: MEMISOGLU, Görkem, 45030 Manisa (TR); ÖCAL, Ömür, 45030 Manisa (TR); ABBAK, Mehmet, 45030 Manisa (TR)
(74) Representative: Ascherl, Andreas

(57) **Abstract**

The present invention refers to a battery (1) for providing multiple nominal voltages. The battery according to the present invention comprises at least one or exactly one anode (2), a separator (4), multiple cathodes (6, 8), wherein the cathodes (6, 8) are arranged side by side and wherein the anode (2) is separated from the cathodes (6, 8) by the separator (4).

## Description

The present invention refers to a battery for providing multiple nominal voltages according to claim 1 and to a method for manufacturing such a battery according to claim 12.

### Background of the Invention

Present battery systems are designed to provide electric energy in a specific framework. Electric devices which are requiring electric power with different specs cannot be powered with the same battery. Furthermore, existing batteries do only allow to power one device at a time.

E.g. document US2001/0007725 A1 discloses a metal-air fuel cell battery system for generating electric power. That system comprises a plurality of movable cathode structures, a supply of metal-fuel tape, an ionically-conducting medium disposed between said plurality of movable cathodes and said metal-fuel tape and a transport mechanism for transporting said plurality of movable cathode structures, said metalfuel tape and said ionically-conductive medium relative to said housing.

### Object of the Invention

Thus, it is an object of the present invention to provide a battery having a better usability and a method for manufacturing such an improved battery.

### Description of the Invention

The before mentioned object is solved by a battery according to claim 1 of the present invention. The battery according to the present invention is designed for providing multiple nominal voltages, thus it can be termed as multipurpose battery. Preferably comprises the battery according to the present invention at least one or exactly one anode, a separator, multiple cathodes, wherein the cathodes are arranged side by side and wherein the anode is separated from the cathodes by the separator. Thus, the battery cathode is preferably divided in at least two different parts (separators and aluminum foils will be preferably also divided into parts). By this way, the battery can preferably provide at least two different outputs.

This solution is beneficial since there are multiple individual respectively separated cathodes arranged side by side. Thus, each cathode can provide an individual voltage level. Thus, in case a low voltage level is necessary only one or a few cathodes are interconnected or coupled to an electric device. In case a higher voltage level is necessary multiple cathodes are interconnected or coupled to an electric device.

The battery of this invention can be used in many electronic devices that need/work with external/internal battery, such as e.g. remote control, toy, watch, mobile phone, tablet PC, laptop, drone, electric vehicle and any other consumer electronics.

Further preferred embodiments are subject-matter of the following description and/or of the dependent claims.

According to a preferred embodiment of the present invention the cathodes are having the same size or the cathodes are having sizes that differs from each other or some cathodes are having the same size and at least one further cathode has a size differing therefrom. This embodiment is beneficial since different voltage levels can be provided due to the combination of respectively selection of multiple cathodes.

According to a further preferred embodiment of the present invention at least two cathodes are comprising different materials, preferably selected from the group of LiCoO₂, LiMnO₂ or LiFePO₄. Preferably consists at least one cathode of a material that differs from the material of at least one further cathode. This solution is beneficial since the nominal voltage also depends on the cathode material. Thus, the cathodes can differ in the material only, that means the overall measurements can be equal, similar or identical. Alternatively, the cathodes, which are comprising different materials can be designed in such a manner that the measurements of said cathodes differ, in particular the surface size of said cathodes and/or the volume of said cathodes can differ.

The anode preferably comprises according to a further embodiment of the present invention at least one material selected from the group of graphite, CNT (carbon nano tubes), TiO₂, Si, NiSi, Li₄,₄Si, Li₄,₄Sn, Li₄,₄Pb, Li₃As, Li₃Sb, LiAl, LiC₆ and/or Li. The anode particular preferably consists of one or multiple, in particular two or at least two, three or at least three of the said materials. The overall measurements of the anode, in particular the surface and/or volume of the anode is preferably equal, similar or identical to the surface size or volume of all cathodes.

With respect to a further preferred embodiment of the present invention it is noticed that at least one cathode comprises at least one material selected from the group of LiCoO₂, LiMnO₂ and/or LiFePO₄. That means that at least one further cathode or preferably all further cathodes or the majority of all cathodes does preferably not comprise at least one material selected from the group of LiCoO₂, LiMnO₂ and/or LiFePO₄. Alternatively, one further cathode or preferably all further cathodes or the majority of all cathodes does preferably comprise at least one material selected from the group of LiCoO₂, LiMnO₂ and/or LiFePO₄, in particular consist of one or more of said materials.

At least one cathode and preferably multiple cathodes are arranged according to a further preferred embodiment of the present invention non-moveable respectively as a stable cathode. Non-movable has preferably to be understood as with respect to the anode and/or the housing and/or at least one further cathode. This solution is beneficial, since according to the present invention there is no need for a plugable or moving type battery. If two or more cathodes are used at the same time, voltage close to the sum of potential of them can be obtained.

At least one and preferably exactly one pin for connecting the anode to at least one electric device is provided according to a further preferred embodiment of the present invention. Particular preferably at least one pin for each cathode is also provided for connecting one or multiple cathodes to the electric device. This solution is beneficial since the battery can be used to provide power for multiple electric devices at the same time.

In case cathodes are similar or identical they provide the same nominal voltage values, thus electric devices of the same type can be powered. In this case it is also possible to power electric devices which require different nominal voltage values, if one device requires e.g. two times the nominal voltage value compared to the other device. Thus, one electric device would be connected to one cathode and the anode and the other electric device would be connected to the anode and two further cathodes.

In case the cathodes differ from each other, then a specific nominal voltage value can be set up in combining multiple of the present cathodes. Or multiple electric devices, which are requiring different nominal voltage values, can be connected to the corresponding pins.

Thus, there are preferably at least one anode and two (or more) cathodes (cathodes with the same material or with at least two different materials) in the battery. Different nominal voltages can be selected by the requirements of the used system of the battery. To generalize this, the cathode can be divided by multiple times (n-times; and provide n+1 nominal voltage). Thus, there are preferably separate multiple cathodes that can supply voltage of the battery levels differently. Producing separately, battery is manufactured by placing two or more cathodes side by side. Anode is one part and cathode is two or more parts. When one cathode is, one voltage value that can be obtained from one cathode is available. By using two cathodes voltage of sum of two cathodes can be obtained. With stand-alone cathodes or by using together multiple of them, different voltages can be obtained. The cathodes are preferably placed side by side, in particular as stand-alone means within a cathode means or can work together at the same time.

Therefore, the pin for connecting the anode to the at least one electric device and the pins for connecting the cathode to the at least one electric device are preferably arranged in such a manner that multiple electric devices are connectable with the pin for connecting the anode and that each of the multiple devices is connectable to at least one individual cathode pin.

At least two of the cathodes are according to a further preferred embodiment of the present invention inter-connectable by an interconnection means. The interconnection means is preferably an element of the battery. Alternatively, the interconnection means can be provided as an additional part. The interconnecting means is preferably configured for setting up a defined nominal voltage value by inter connecting multiple cathodes of the same type and/or of different types.

An electrolyte fluid and a housing are provided according to a further preferred embodiment of the present invention, wherein anode, separator, the electrolyte fluid and all cathodes are preferably arranged inside the housing.

The before mentioned object is also solved by a method for manufacturing a battery. The method preferably comprises at least the steps: providing material for manufacturing of an anode and providing material for manufacturing of multiple cathodes, coating an anode substrate with the material for manufacturing an anode, in particular by means of a roll to roll process or a sputtering process, wherein the coated anode substrate represents an anode means or is formed into at least one anode means, coating a cathode substrate with the material for manufacturing a cathode, in particular by means of a roll to roll process or a sputtering process, wherein the coated cathode substrate represents a cathode or is formed into a cathode, forming a cathode means, wherein the cathode means comprises multiple cathodes arranged side by side, wherein at least one cathode comprises the coated cathode substrate, providing at least one separator. One or more further beneficial steps can be aligning the anode means, the cathode means and the separator with respect to each other to for a stack, packing the stack, exsiccating the stack, foliating the stack, filling an electrolyte fluid inside the foliated stack, and/or sealing the stack. This method is beneficial since multiple cathodes are generated and assembled in such a manner that the multipurpose battery according to the present invention results. Alternatively, it is also conceivable that multiple anodes are provided or generated or utilized.

Forming an anode pin for connecting the anode means with at least one electric device and forming multiple cathode pins for connecting the individual cathode pins with the electric device are further preferred steps according to the method of the present invention. Alternatively, the following steps are beneficial: Forming an anode pin for connecting the anode means with multiple electric devices and forming multiple cathode pins for connecting the cathode pins individually with the electric devices until each electric device is at least connected with the anode and one of the cathodes.

To generalize this method, cathode can preferably be divided by multiple times (n-times; and provide n+1 nominal voltage).

Further benefits, goals and features of the present invention will be described by the following specification of the attached figures, in which exemplarily components of the invention are illustrated. Components of the systems and methods according to the inventions, which match at least essentially with respect to their function can be marked with the same reference sign, wherein such components do not have to be marked or described in all figures.

In the following the invention is just exemplarily described with respect to the attached figures.

### Brief Description of the Drawings

- Fig. 1: shows an example of a flow chart representing a preferred manufacturing process of the battery according to the present invention;
- Fig. 2a: shows schematically an anode means and two examples of cathode means;
- Fig. 2b: shows schematically a perspective view of the arrangement of the main components of the battery according to the present invention; and
- Fig. 3a: shows a first schematically example of a battery according to the present invention powering an electric device and
- Fig. 3b: shows a second schematically example of a battery according to the present invention powering two electric devices.

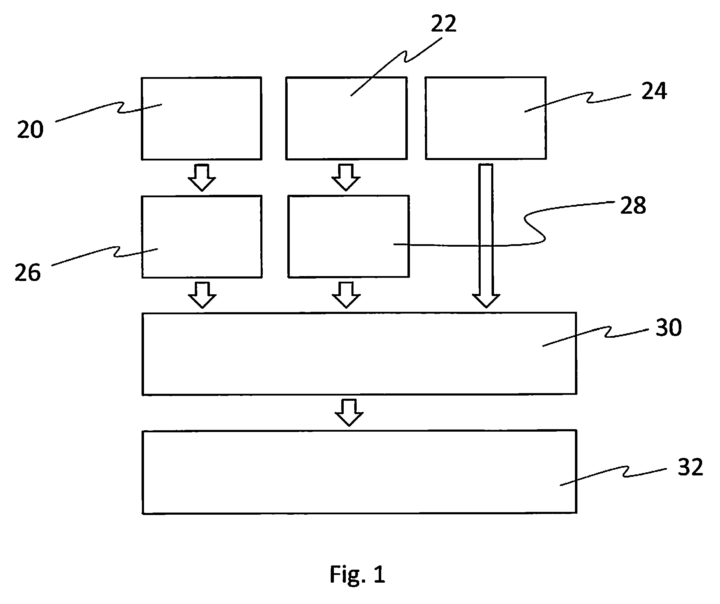

Fig. 1 shows multiple steps in a preferred manufacturing process of the battery according to the present invention. Reference number 20 preferably indicates the step of providing anode material, wherein the anode material is preferably further processed between step 20 and 26. The processing is preferably a "roll to roll" process that causes a coating on a substrate. Thus, reference number 26 preferably refers to the present anode substrate. Reference number 22 preferably indicates the step of providing cathode material, wherein the cathode material is preferably further processed between step 22 and 28. The processing is preferably also a "roll to roll" process. Thus, reference number 28 preferably refers to the present cathode substrate. According to reference number 24 at least one separator is provided. The anodes, cathodes and separators are aligned in step 30. A further processing of the aligned components takes place in step 32. Such a further processing can comprise one or more of the following step: packing, exsiccation, foliation, electrolyte-filling and/or sealing.

Preferably the anode and cathode materials are coated on different kinds of foils. All materials in this structure can be varied according to the application.

There is preferably one separator 4 between anode 2 and multiple cathodes 6, 8. All this structure is covered with packaging materials (housing 18). An electrolyte is preferably filled into the battery system after packaging.

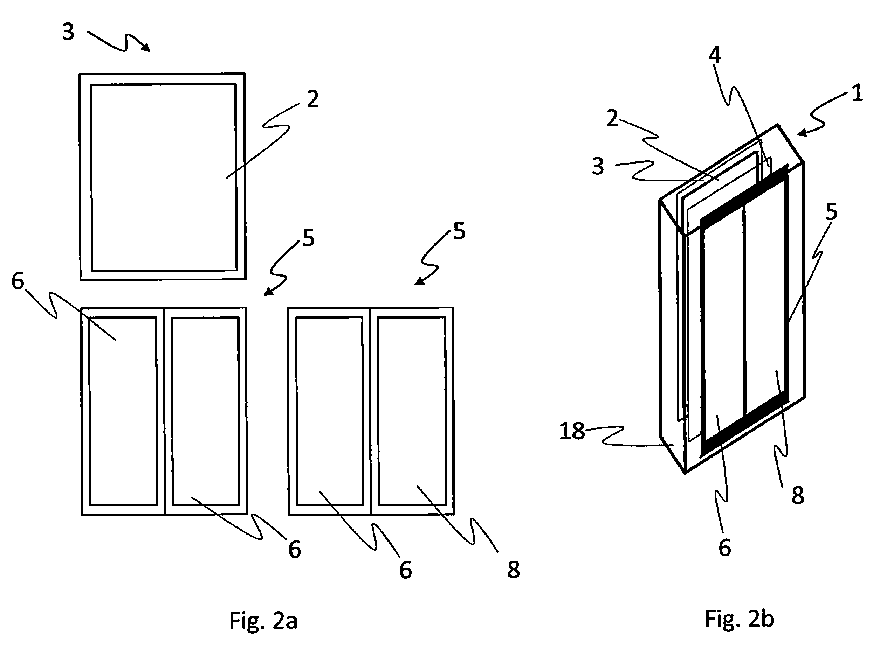

Fig. 2a shows an anode means 3, at least comprising one anode.

The anode means 3 preferably comprises wires or connections for connecting to a further means, in particular a separator 4 and/or a housing 18. The anode means 3 preferably has a nominal voltage value V3.

Fig. 2a further shows two examples of cathode means 5.

The left example comprises two cathodes 6 of the same type. These cathodes 6 are preferably having the same size and/or volume and/or material. Thus, the nominal voltage values (V1, V2) of these cathodes 6 are preferably equal or similar.

The example on the right side shows a cathode means 5 that comprises a first cathode 6 and a second cathode 8, wherein the first and second cathodes 6, 8 are differing in at least one parameter from each other. The differing parameter preferably is the surface size and/or the volume and/or the material. Thus, the nominal voltage values (V1, V2) of these cathodes 6, 8 are preferably differing from each other.

In one example two different kinds of materials are used to provide three nominal voltage values in the cathode.

Cathodes, produced with same material, actualize the same voltage. System is based on that voltage. (Only V1)

Cathodes, produced with same material, actualize voltage that is sum of same voltage from two or more cathodes. (V1+V2+....Vn)

Cathodes, produced with different materials, actualize the different voltage. System is based on that voltage. (Only V1)

Cathodes, produced with different materials, actualize voltage that is sum of different voltages from two or more cathodes. (V1+V2+....Vn)

Both examples show that the cathodes of each cathode means 5 are arranged side by side, in particular fixed to each other.

Fig. 2b shows schematically how the individual components, in particular anode means 3, separator 4 and cathode means 5 are preferably arranged inside a housing 18. It must be understood that the cathode means 5 having cathodes 6, 8 differing from each other, is only exemplarily shown herein. Thus, the anode 2, in particularly the one anode 2, is preferably facing multiple cathodes 6, 8, wherein separator 4 is preferably separating anode 2 from cathodes 6, 8.

Thus, the battery cathode is divided in preferably at least two (or more) different parts. The separator respectively separators and aluminum foils will preferably also be divided into parts.

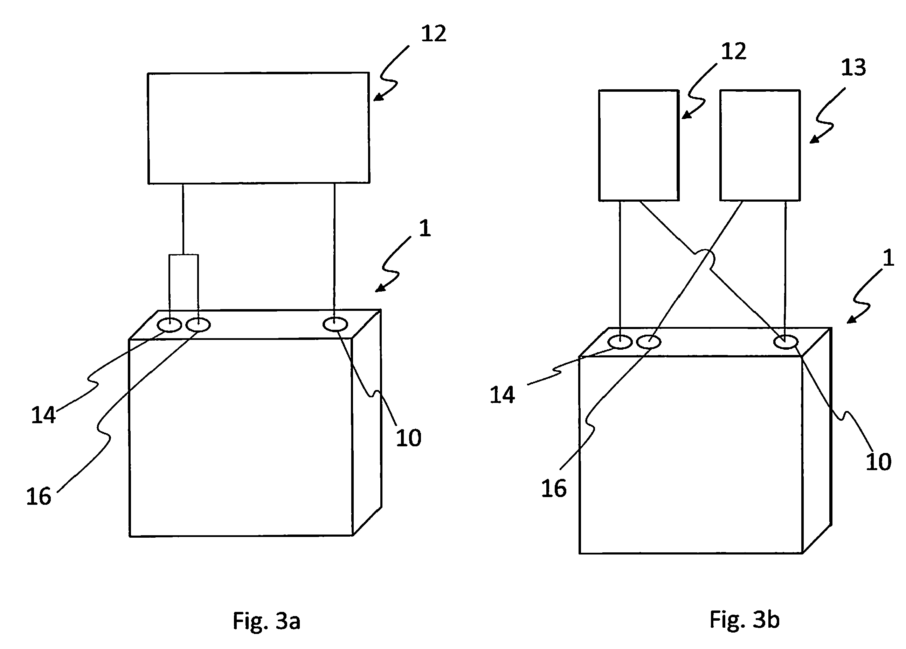

Fig. 3a shows a battery 1. Said battery 1 comprises a first cathode pin 14 connected to a first cathode 6 and a second cathode pin 16 connected to a second cathode 8. It must be understood that the first cathode 6 and the second cathode 8 can be from the same type.

Furthermore, reference number 10 indicates an anode pin, which is connected to the anode 2.

Reference number 12 indicates an electric device. This electric device 12 is connected to the battery 1 and powered by the battery 1. In case the cathodes 6, 8 differ from each other, then a specific nominal voltage value can be set up in combining multiple of the present cathodes 6, 8.

Thus, in case a low voltage level is necessary only one or a few cathodes 6, 8 are interconnected or coupled to an electric device 12. In case a higher voltage level is necessary multiple cathodes 6, 8 are interconnected or coupled to an electric device 12.

Fig. 3b refers to further use-cases of the battery 1 according to the present invention.

In case cathodes 6are similar or identical they provide the same nominal voltage values, thus electric devices 12, 13 of the same type can be powered.

It is also possible to power electric devices 12, 13 which require different nominal voltage values, if one device requires e.g. two time the nominal voltage value compared to the other a device. Thus, one electric device 12 could be connected to one cathode 6 and the anode 2 and the other electric device 13 could be connected to the anode 2 and at least or exactly two further cathodes 6, 8.

In case the cathodes 6, 8 are differing in at least one parameter, in particular the material, then their nominal voltage values differ. So, if the first cathode 6 provides a first voltage value V1 which is different from a second voltage value provided by the second cathode 8 than a first electric device 12 might only be powered by the first cathode 6 (and the anode 2) and a second electric device 12 might only be powered by the second cathode 8 (and the anode 2).

Reference number 14 refers to a cathode pin for connecting the first cathode 6 with preferably one electric device 12. Reference number 16 refers to a cathode pin for connecting the second cathode 8 with preferably one electric device 12. Reference number 10 refers to an anode pin for connecting the anode 2 with preferably one or preferably multiple electric devices 12. Thus, the battery 1 can provide two (or more) different outputs, in particular at least one + and minimum two - pins, in the system (V1, V2, .... Vn).

This type of battery 1 can be applied to various industrial applications including electronic parts, such as, electric vehicles on automotive fields, consumer electronics, toys, communication devices, biomedical electronics, and so on.

Thus, the present invention refers to a battery 1, in particular a multipurpose battery, for providing multiple nominal voltages. The battery according to the present invention comprises at least one or exactly one anode 2, a separator 4, multiple cathodes 6, 8, wherein the cathodes 6, 8 are arranged side by side and wherein the anode 2 is separated from the cathodes 6, 8 by the separator 4.

### Reference numbers

- 1: battery
- 2: anode
- 3: anode means
- 4: separator
- 5: cathode means
- 6: first cathode
- 8: second cathode
- 10: anode pin
- 12: first electric device
- 13: second electric device
- 14: first cathode pin
- 16: second cathode pin
- 18: housing
- 20: Providing anode material
- 22: providing cathode material
- 24: providing a separator
- 26: manufacturing the anode substrate
- 28: manufacturing the cathode substrate
- 30: aligning of anode, cathodes and separator
- 32: further processing

## Claims

1. Battery (1) for providing multiple nominal voltages,
at least comprising
one or exactly one anode (2),
a separator (4)
multiple cathodes (6, 8),
wherein the cathodes (6, 8) are arranged side by side and
wherein the anode (2) is separated from the cathodes (6, 8) by the separator (4).

2. Battery according to claim 1
**characterized in that**
the cathodes (6, 8) are having the same size or
the cathodes (6, 8) are having sizes that differs from each other or
some cathodes (6) are having the same size and at least one further cathode (8) has a size differing therefrom.

3. Battery according to claim 1 or claim 2,
**characterized in that**
at least two cathodes (6, 8) are comprising different materials, preferably selected from the group of LiCoO₂, LiMnO₂ or LiFePO₄.

4. Battery according to any of the preceding claims,
**characterized in that**
the anode (2) comprises at least one material selected from the group of graphite, CNT (carbon nano tubes), TiO₂, Si, NiSi, Li₄,₄Si, Li_{4,4}Sn, Li_{4,4}Pb, Li₃As, Li₃Sb, LiAl, LiC₆ and/or Li.

5. Battery according to any of the preceding claims,
**characterized in that**
at least one cathode (6) comprises at least one material selected from the group of LiCoO₂, LiMnO₂ and/or LiFePO₄.

6. Battery according to any of the preceding claims,
**characterized in that**
at least one cathode (6) and preferably multiple cathodes (6, 8) are arranged non-moveable with respect to the anode (2).

7. Battery according to any of the preceding claims,
**characterized in that**
at least one and preferably exactly one pin (10) for connecting the anode (2) to at least one electric device (12) is provided and
at least one pin (14, 16) for each cathode (6, 8) is provided for connecting one or multiple cathodes (6, 8) to the electric device.

8. Battery according to any of the preceding claims,
**characterized in that**
the pin (10) for connecting the anode (2) to the at least one electric device (12) and the pins (14, 16) for connecting the cathode (6, 8) to the at least one electric device (12) are arranged in such a manner that multiple electric devices (12, 13) are connectable with the pin (10) for connecting the anode (2) and that each of the multiple devices (12) is connectable to at least one individual cathode pin (14, 16).

9. Battery according claim 8,
**characterized in that**
at least two of the cathodes (6, 8) are inter connectable by an interconnection means.

10. Battery according to claim 9,
**characterized in that**
the inter connecting means is configured for setting up a defined nominal voltage value by inter connecting multiple cathodes of the same type and/or of different types.

11. Battery according to any of the preceding claims,
**characterized in that**
an electrolyte fluid and a housing (18) are provided,
wherein anode (2), separator (4), the electrolyte fluid and all cathodes (6, 8) are arranged inside the housing (18).

12. Method for manufacturing a battery
at least comprising the steps:
providing material for manufacturing an anode (2) and providing material for manufacturing multiple cathodes (6, 8),
coating an anode substrate with the material for manufacturing an anode by means of a roll to roll process, wherein the coated anode substrate represents an anode means or is formed into at least one anode means,
coating a cathode substrate with the material for manufacturing a cathode by means of a roll to roll process, wherein the coated cathode substrate represents a cathode or is formed into a cathode,
forming a cathode means, wherein the cathode means comprises multiple cathodes (6, 8) arranged side by side, wherein at least one cathode (6) comprises the coated cathode substrate,
providing at least one separator (4),
aligning the anode means, the cathode means and the separator with respect to each other to for a stack,
Packing the stack,
Exsiccating the stack,
Foliating the stack,
Filling an electrolyte fluid inside the foliated stack, and
Sealing the stack.

13. Method according to claim 12,
**characterized by** the step:
Forming an anode pin (10) for connecting the anode means (3) with at least one electric device (12) and
forming multiple cathode pins (14, 16) for connecting the individual cathode pins (14, 16) with the electric device (12).

14. Method according to claim 12,
**characterized by** the step:
Forming an anode pin (10) for connecting the anode means (3) with multiple electric devices (12, 13) and
forming multiple cathode pins (14, 16) for connecting the cathode pins (14, 16) individually with the electric devices (12, 13) until each electric device (12, 13) is at least connected with the anode (2) and one of the cathodes (6, 8).
